# EUROPEAN PATENT SPECIFICATION

(11) **EP 1 971 109 B1**
(45) Date of publication and mention of the grant of the patent: **11.05.2016**
(21) Application number: 07005487.9
(22) Date of filing: 16.03.2007
(51) Int. Cl.: H04L 29/08

(54) **METHOD AND DEVICE FOR EVENT SIGNALING AND COMMUNICATION SYSTEM COMPRISING SUCH DEVICE**
VERFAHREN UND VORRICHTUNG ZUR EREIGNISSIGNALISIERUNG UND EINE SOLCHE VORRICHTUNG UMFASSENDES KOMMUNIKATIONSSYSTEM
PROCÉDÉ ET DISPOSITIF DE SIGNALISATION D'ÉVÈNEMENTS ET SYSTÈME DE COMMUNICATION COMPRENANT UN TEL DISPOSITIF

(43) Date of publication of application: 17.09.2008
(73) Proprietor: Nokia Solutions and Networks GmbH & Co. KG, 81541 Munich (DE)
(72) Inventor: Kappler, Cornelia, Dr., 10587 Berlin (DE); Zhou, Di, Dr., 1220 Wien (AT)
(74) Representative: Weidel, Gottfried

(56) References cited:
- US-A1- 2005 013 257
- US-A1- 2005 021 843
- NIEBERT, PREHOFER, HANCOCK, NORP, NIELSEN: "Ambient Networks - A New Concept for Mobile Networking" WIRELESS WORLD RESEARCH FORUM, [Online] 5 November 2004 (2004-11-05), pages 1-8, XP002444017 [retrieved on 2007-07-24]
- ABROMOWICZ: ""Ambient Networks Phase 2" D7-A.2 Draft System Description - Annex" WIRELESS WORLD INITIATIVE, [Online] 15 January 2007 (2007-01-15), pages 1-37, XP002444018 Retrieved from the Internet: URL:http://www.ambient-networks.org/Files/ deliverables/D7-A.2annex_PU.pdf> [retrieved on 2007-07-24]

## Description

The invention relates to a method and a device for event signaling and to a communication system comprising such device.

US 2005/0021843 A1 describes a message broker for managing subscription requests in a multicast messaging system comprising a plurality of publishers publishing information to the broker and a plurality of subscribers subscribing to information received from one or more publishers.

US 2005/0013257 A1 describes a method of event notification for use over a communications network. An entity property state is communicated to a user simultaneously with a communications channel identifier for a channel where future changes of state of the property or events will be announced. The method allows for clients to communicate directly with event servers to inform the servers of their interest in a particular object and to obtain both the present state of the object from the server as well as an indication as to where future changes of state relating to the object will be announced in a single message.

As envisioned by the EU FP6 WWI Integration Project "Ambient Networks", various dynamically loosely coupled or statically tightly coupled self-contained networks are being designed and developed, which will penetrate into all aspects of social lives in the near future. Such self-contained networks will be designed for very different purposes and have different sizes and properties, e.g. personal area networks, sensor networks, enterprise networks and infrastructure provider networks.

Also, many of such future networks will have a common architecture, i.e. a network control space consisting of diverse traditional and innovative control functions running on top of a classical data transport connectivity networks. An example of this common architecture is an Ambient Network consisting of an Ambient Network Control Space (ACS) and a data transport network based on IP-technology, which are bound to each other by the Ambient Network Resource Interfaces (ARI).

A network control space consists of various mandatory and optional control functions, e.g. a network management control function, a security control function, a mobility management control function, a compensation control function, etc. The control functions of the same network control space have to cooperate and to synchronize with each other to fulfill common tasks and to handle same events. "Event signaling" (or "event notification") is a widely used approach to enable cooperation and synchronization among relevant control functions of the same network control space, where a control function, i.e. the event-publisher, detects an event and signals/notifies all other concerned control functions, i.e. the event-subscribers, about that event by sending them a dedicated common message containing all related event-information. The following example illustrates "event signaling" in some more details.

The following example is used to explain the background in more detail:
Peter is using his personal area network currently consisting of a mobile phone, a notebook and a gaming device, which are connected to each other by blue-tooth. Peter has written several emails with his notebook and started a remote game at his gaming device. Since there is currently no access to Internet from Peter's personal area network the emails are being stored at the notebook by the email control function and the game control function running at the gaming device stays in the idle mode, waiting for connectivity connections to outside. Peter's mobile phone attaches now to an infrastructure provider network providing access to Internet. The connectivity control function running on the mobile phone detects this event and notifies the email control function running at the notebook and the game control function running at the play-station, which then sends the emails and starts the game respectively. In this example, the event is "the connectivity to the outside is setup", the event-publisher is the connectivity control function and the event-subscribers are the email control function and the game control function.

So far, the event signaling in a self-contained network relies always on the existence of a central notification service which manages the subscriptions of all the concerned event-subscribers and forwards the event signaling messages got from the corresponding event-publisher to each of these event-subscribers by dedicated unicast event signaling messages with the same payload information. Besides the inefficient message propagation using duplicated multiple unicast messages with the same payload information, such centralized approach relies on at least three prerequisites, i.e.
1. the static existence of central notification services,
2. the knowledge of all event-publishers and subscribers on the identifiers and/or the locators of the central notification services and
3. the common agreements among concerned event-publishers and subscribers to use the same central notification services.

In a dynamic networking environment where new equipment may join and old equipment may leave a network from time to time dynamically, it is not possible to meet the first two conditions above. Furthermore, in a dynamic network it is not always reasonable to require permanent existence of any equipment, where a central notification service may statically run. To improve the robustness and to avoid a performance bottleneck of a self-contained network, more than one central notification services may be required to coexist. This may make it difficult to meet the third precondition.

Further in the EU FP6 Integration Project "Ambient Networks", the urgent needs of distributed event signaling approaches have been recognized and understood for the dynamic networking environments like Ambient Networks, but the current ACS design is still based on the central notification service "Trigger Functional Entity", due to lack of feasible technical solutions.

So far, event signaling/notification uses only centralized approaches and relies on the static existence and the flawless function of central notification service entities, e.g., the well-known notification service specified by the Object Management Group (OMG) based on Common Object Request Broker Architecture (CORBA) technology.

The basic processes of such centralized approaches can be divided into two parts, i.e. the process of event subscription and the process of event-message propagation.

All control functions interested in a certain event, i.e. the potential event-subscribers, have to subscribe themselves at first at the central notification service in charge of handling this event. By detecting an instance of this event, an event-publisher informs the corresponding central notification service by a unicast message with all the related information on the event-instance, which in turn forwards this event-message to each of the concerned event-subscribers by duplicated unicast messages with the same event-information payload.

The more and more dynamic and flexible properties of various self-contained networks make it increasingly difficult to always ensure the prerequisites for applying such centralized event signaling approaches. Also, these self-contained networks demand more flexible distributed approaches.

The **object** to be solved is to overcome the disadvantages as stated above and to provide a dynamic, flexible and distributed approach enabling efficient event signaling, which does in particular not rely on any central notification service.

This problem is solved according to the features of the independent claims. Further embodiments result from the depending claims.

In order to overcome this problem a flexible and dynamic distributed approach of event signaling is provided based on an IP-multicast technology.

In particular, there is provided a method for event signaling, wherein the event signaling is based on a multicast technology, the method comprising the steps of recognizing an event by a sender, wherein the sender is an event publisher, mapping an event and/or an event identifier to a multicast address using a mapping function by the sender, the mapping function commonly shared with related potential event publishers, initiating by the sender an action corresponding to the event via an IP multicast message, putting the multicast message with the corresponding multicast address to an IP data transport network and sending the multicast message to all the message receivers of the same multicast group by the sender, wherein the message receivers are event-subscribers able to map an event and/or an event identifier to a multicast-address using the mapping function, and which are registered for the event with their respective adjacent router using the corresponding multicast address.

A method is provided for event signaling based on a multicast technology comprising the steps:
- an event is recognized by a sender;
- an action corresponding to the event is initiated by the sender via a multicast message.

The sender can be any entity that initiates a multicast message. In particular, the sender can be a producer within a network.

It is an embodiment that the sender is a subscriber of a group. In such case, the group can be a multicast group.

It is to be noted that preferably the event-consumers are subscribers of the related IP-multicast group, but the producer of an event does not necessarily have to be such a subscriber of the IP-multicast group.

It is of advantage that a subscriber may act as a producer due to the multicast technology provided, i.e. the subscriber can produce a multicast-message pursuant to an event recognized by said subscriber.

The subscriber may be (a portion of) an entity of a network, preferably of a communication network. Such subscriber can be realized as software or as hardware within such entity, which may be a network node, a gateway, a terminal, a switch, a router or the like.

As an embodiment, the subscriber comprises a control function. Such control function may comprise at least one of the following functionalities:
- selection of a mapping function;
- adjustment of related parameters;
- provision of a data packet.

As a further embodiment, a mapping function can be used that maps an event and/or an event identifier to a multicast-address.

Such mapping function can be realized by a Hash-function.

It is another embodiment that the mapping function is realized as a commonly known or standardized Hash-function. Hence, in case of an update of the mapping function, only parameters (instead of the Hash-function itself) can be distributed among the subscribers of the multicast-address.

It is an embodiment that the mapping-function and/or parameters of the mapping function is/are distributed and/or synchronized. This can be done, e.g., via an URL accessible to, e.g., a subscriber of the multicast group.

It is also an embodiment that the subscriber registers and/or deregisters itself at a next router.

Further, the other subscribers of the group are notified of an event by sending the multicast message.

As yet another embodiment, said multicast technology is realized as IP-multicast and said multicast-message is an IP-multicast message.

In an embodiment the event comprises:
- an update of a mapping function;
- a registration of the subscriber;
- a deregistration of the subscriber.

As a further embodiment the event signaling is used in a communication network, in particular in a self-contained network.

The object stated supra is also solved by a device for event signaling comprising a processor unit that is equipped and/or arranged such that the method described herein can be executed on said processor.

The device can be a communication device, in particular a component with in network, in particular of a communication network.

In addition, the problem stated supra is solved by a communication system comprising at least one of such devices.

Embodiments of the invention are shown and illustrated in the following figures:
- Fig.1: shows in a diagram as how control functions of a self-contained network synchronize with each other to share the same common mapping function enabling distributed event signaling based on IP-multicast;
- Fig.2: shows in a diagram as how a new control function joins an existing self-contained network dynamically and synchronizes with all other control functions to share the same common mapping function enabling distributed event signaling based on IP-multicast;
- Fig.3: shows in a diagram as how concerned control functions of a self-contained network dynamically resynchronize with each other to share the same newly updated common mapping function enabling distributed event signaling based on IP-multicast;
- Fig.4: shows in a diagram a process as how a control function of an self-contained network dynamically registers itself as subscriber of a concerned event;
- Fig.5: shows a process according to which a control function of an self-contained network publish an instance of an event to all the event-subscribers of that event;
- Fig.6: shows principles of a logical organization of the normal operations concerning event-signaling of each control function, after the bootstrapping phase, as both the publisher of the event instances it detects and a subscriber of events published by other control functions.

### PRINCIPLES

In IP-multicast technology all multicast message senders and receivers of a multicast group share one and the same multicast address. To receive multicast messages of a certain multicast group, a message receiver has to register itself at the nearest next router with the related multicast address using a multicast host-router protocol.

To send a multicast message to all the message receivers of the same group, a sender puts the multicast message with the corresponding multicast address to the IP data transport network. The multicast router-router protocols and the multicast host-router protocols ensure efficient message distribution to all the message receivers registered to the same multicast group, preferably without unnecessary duplicated message transportation on same data transportation paths. IETF has been specifying a IP-multicast technique based on the host-router protocols like MLD (Multicast Listener Discovery / RFC3810) and MRD (Multicast Router Discovery / RFC 4286) as well as router-router protocols like PIM-DS (Protocol Independent Multicast - Dense Mode / RFC 3973) and PIM-PS (Protocol Independent Multicast - Sparse Mode RFC 4601).

Herewith provided is an efficient flexible distributed approach of event signaling suitable for various self-contained dynamic networks, based on any kind of IP-multicast.

Preferably, local IP-multicast addresses are applied, e.g. site-local or organization-local. In this document "multicast addresses" preferably relates to "local multicast addresses".

An idea of the approach proposed is to enable a suitable one-to-one or several-to-one mapping from the identifiers and/or describers of the concerned events to pre-allocated IP-multicast addresses, which is commonly shared by all related potential event-publishers and event-subscribers. Thus, each potential event-publisher or event-subscriber may map a concerned event directly by itself to the corresponding IP-multicast address. The potential event-subscribers can then register themselves to the related multicast group directly with their respective adjacent router using this multicast address in a fully distributed way and the event-publishers can inform all the registered event-subscribers about instances of the concerned event by putting multicast messages with the same multicast address to the IP data transport network, which ensures efficient and exact event-message propagation to all the event-subscribers registered for this event.

Since each individual event-subscriber can do both, i.e. the event registration and the event deregistration by itself at its next router in a fully distributed way and the concerned event-messages from each event-publisher are delivered to all the registered event-subscribers directly by the underlying IP data transport network, there is no need anymore for support by any central service within the self-contained network.

A technical challenge of the distributed event-singling approach based on IP-multicast is how to ensure a common mapping of event identifiers/describers to pre-allocated IP-multicast addresses, which is synchronously shared by all concerned event-subscribers and event-publishers.

There are functions, algorithms and mechanisms which can be applied to map the concerned event identifiers and/or describers to pre-allocated IP-multicast addresses, for instance diverse kinds of Hash functions.

Each self-contained network may concern different categories of events, allocate different sets of IP-multicast addresses and select different mapping functions dynamically for the purpose of event signaling.

This approach covers the processes and mechanisms ensuring dynamic synchronization among all control functions of a self-contained network regarding the common mapping functions.

The term "mapping functions" is preferably, used for functions, algorithms and mechanisms including all required executables and related parameters used to map the concerned event identifiers/describers to the pre-allocated IP-multicast addresses in a self-contained network.

The decision on and the selection of certain mapping functions in a self-contained network belongs typically to the tasks of the network management control function and can be driven either by related policies automatically or at least partially manually, according to the respective purpose and the specific working environment of the network.

During the process of network bootstrapping the network management control function may contact to and exchange management information with each other control functions of the same network to establish a networking organization. During this phase the mapping functions can be downloaded from the network management control function to all the other control functions. This ensures that after a successful bootstrapping process all the control functions, i.e. all the potential event-publishers and event-subscribers, use the one and the same mapping function for the purpose of distributed event-signaling.

When a new control function (e.g. together with a new network node) joins an existing self-contained network, it has to contact the network management control function and exchange management information with it, independently of the event-signaling issues at stake. During this process, the mapping function can be downloaded to the new control function. This ensures that the new control function, a new potential event-subscriber or event-publisher, synchronizes with all other control functions and maps the same events to the same IP-multicast addresses.

The mapping function including related parameters used in a self-contained network for the purposes of event signaling can be changed for various reasons, e.g. because of a potential conflict of IP-multicast addresses due to the changed networking environment. Such changes can be dynamic, but are typically not very frequent. Hence, in such a case all the control functions, i.e. the potential event-subscribers and event-publishers, have to be informed in time for downloading the whole or only a part of the updated mapping function. This can be realized by a "mapping function update"-event, which all the concerned control functions shall register for. The network management function just needs to publish this event by putting an IP-multicast message with the correctly mapped multicast address to the underlying IP data transport network, describing this event and instructing all the concerned control functions to resynchronize their mapping functions.

If a common Hash function can be agreed on throughout the network environment or if such Hash function used for mapping events can be standardized, all concerned control functions can be synchronized with each other by only exchanging related parameters. This would significantly simplify the synchronization process.

In the following, processes related to the approach of distributed event signaling will be described in more detail.

The control functions mentioned above can be, in this context, any software and/or hardware entity. They can also be realized as user applications.

The term "network management control function" is used to refer to any distributed or centralized network organization entity, where the decision on the mapping functions is made, it can, e.g., be integrated into an applied DHCP architecture.

The existence of the network management control function is not necessary for a process of event message propagation from the event-publisher to the concerned event subscriber.

### PROCESS OF MAPPING FUNCTION SYNCHRONIZATION DURING NETWORK BOOTSTRAPPING

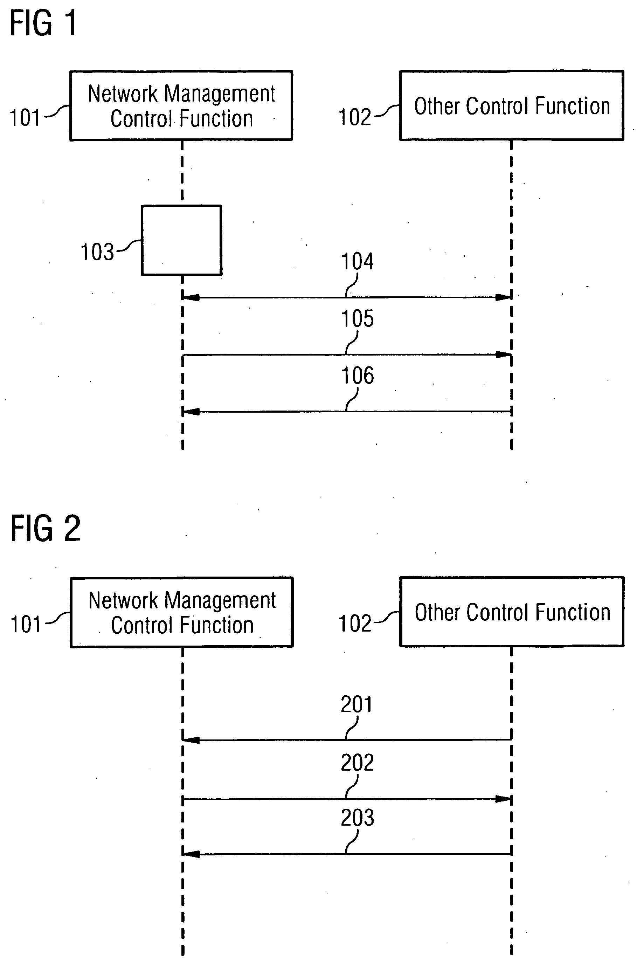

With reference to **Fig.1****,** it is described as how control functions of a self-contained network synchronize with each other to share the same common mapping function enabling distributed event signaling based on IP-multicast.
1. In a step 103 the network management control function 101 makes decisions on event-mapping, selects the mapping function and adjusts the related parameters, e.g. a Hash function mapping the identifiers and/or describers of all the concerned events to a pre-allocated set of local IP-multicast addresses. This process of decision making can be driven either by related policies automatically or manually, according to concrete purposes and specific working environments of the network. All the related executables and data are packed into a download packet.
2. In a step 104, the network management control function 101 establishes a organization relation of a certain control function by message exchanges. The contact between the management control function 101 and the other control function 102 can be initiated by any of both sides.
3. In a step 105, the network management control function 101 informs the other control function 102 about the readiness of the mapping function, including the location (e.g. URL) for download, which can be the network management control function itself.
4. In a step 106, the other control function 102 downloads the mapping function, processes it and registers to the next router for the concerned events, e.g. the event "mapping function update".
5. The Steps 104, 105 and 106 are repeated for each other control functions.

If a mapping functions, e.g., a Hash function, can be standardized, only related parameters for such standardized Hash function need to be synchronized. In this case, step 105 and step 106 may be combined and thus simplified.

### PROCESS OF MAPPING FUNCTION SYNCHRONIZATION ENABLING NETWORK EXTENSION

With regard to **Fig.2****,** it is described a process as how a new control function joins an existing self-contained network dynamically and synchronizes with all other control functions to share the same common mapping function enabling distributed event signaling based on IP-multicast.
1. In a step 201, the other control function 102 tries to join an existing self-contained network by contacting the corresponding network management control function 101.
2. In a step 202, the network management control function 101 informs the other control function 102 about the readiness of the mapping function, including the location (e.g. URL) for download, which can be the network management control function 101 itself.
3. In a step 203, the other control function 102 downloads the mapping function from the network management control function 101, processes it and registers to the next router for the concerned events, e.g. the event "mapping function update".

If the mapping functions, e.g. a Hash function, can be standardized, only related parameters need to be synchronized. In this case, step 202 and step 203 can be combined.

The process for a control function to leave an existing self-contained network is similar, considering the aspects of event-signaling. No control functions other than the one which is leaving have to do anything. All the action the leaving control function has to do is to deregister itself by the next router before it leaves. Even this action sometimes does not need to be performed as the router-host protocol of the underlying IP data transport network may detect a non longer existent multicast listener on its own.

### PROCESS OF MAPPING FUNCTION RESYNCHRONIZATION

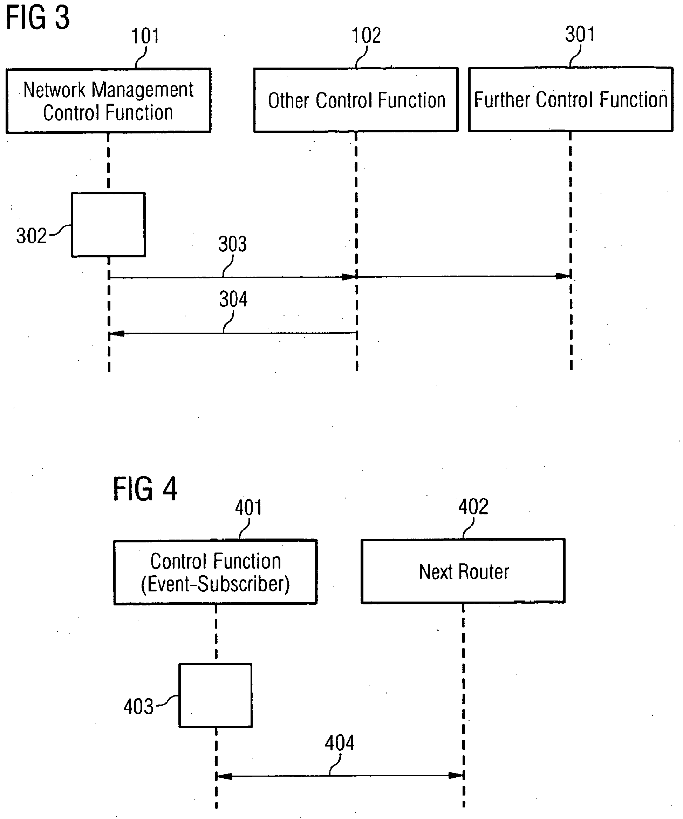

With regard to **Fig.3****,** a process is shown as how concerned control functions of a self-contained network dynamically resynchronize with each other to share the same newly updated common mapping function enabling distributed event signaling based on IP-multicast.
1. In a step 302 the network management control function 101 decides to update the mapping function currently used in a self-contained network partially or totally and packs related executables and data into a download packet.
2. In a step 303, the network management control function 101 calculates an IP-multicast address for the event "mapping function update" using the old mapping function. It then informs all the other concerned control functions on this event by simply putting an IP-multicast message with the multicast address to the underlying IP data transport network, including the location (e.g. URL) for download. The IP-multicast message is sent to the other control function 102 as well as to a further control function 301.
3. In a step 304, the network management control function 101 is informed that the other control function 102 downloads the mapping function, processes it, registers to the next router for the concerned events, e.g. the event "mapping function update", and deregister all the invalid old registrations.

### PROCESSES OF EVENT-SUBSCRIBING AND EVENT-PUBLISHING

**Fig.4** visualizes a process as how a control function of an self-contained network dynamically registers itself as subscriber of a concerned event.

Process of event-subscribing:
1. In a step 403 the control function 401 as an event-subscriber calculates the required IP-multicast address by applying the common mapping function over the identifier/describer of the concerned event.
2. In a step 404, the control function 401 registers itself at a next router 402 (by host-router protocol) for listening to all the IP-multicast messages sent to the IP-multicast address mentioned above.

A corresponding deregistration is done in an analogue manner. The control function 401 deregisters itself at the next router 402 (by host-router protocol) from the corresponding multicast groups identified by the multicast address.

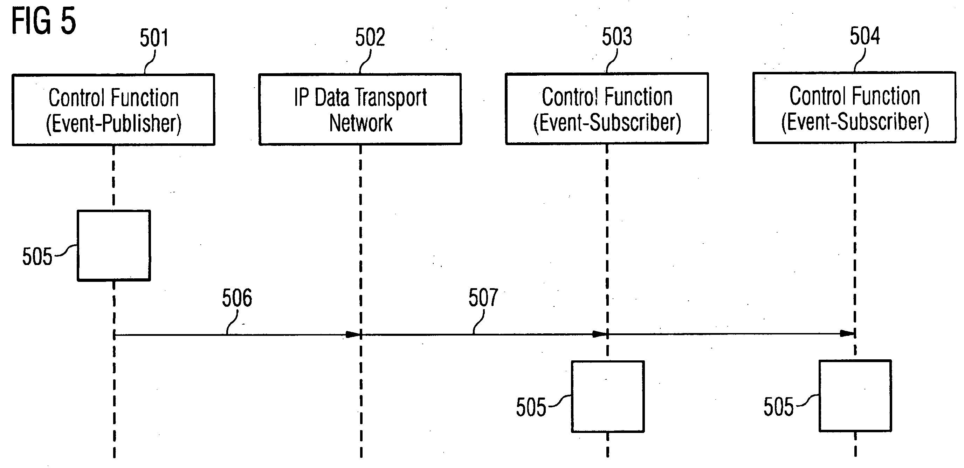

**Fig.5** shows a process according to which a control function of an self-contained network publish an instance of an event to all the event-subscribers of that event.

Process of event-publishing:
1. In a step 505 the control function 501 calculates the required IP-multicast address by applying the common mapping function over the identifier/describer of the event, of which an instance is detected.
2. In a step 506, the control function 501 builds a multicast message including all necessary information about the event instance and sends it to the underlying IP data transport network 502 with the IP-multicast address mentioned above.
3. In a step 507, the event-message is distributed by the underlying IP data transport network 503 to related event-subscribers, i.e. control function 503 and control function 504, which are registered for this event.
4. In a step 505 each control function 503 and 504 acting as event subscriber analyzes the payload information on the event instance, filters out those which are currently not interested and triggers corresponding reactions to the interested ones.

### IMPLEMENTATION CONSIDERATIONS

The implementation of the processes presented can be provided with any IP based data transport networks.

The multicast messages and the related mechanisms are designed specifically for the networking environments based on the IP-multicast technology. The unicast messages can be implemented simply by either UDP or TCP depending on concrete use-cases. All processes can be realized by special service packets and be integrated into corresponding protocol stacks.

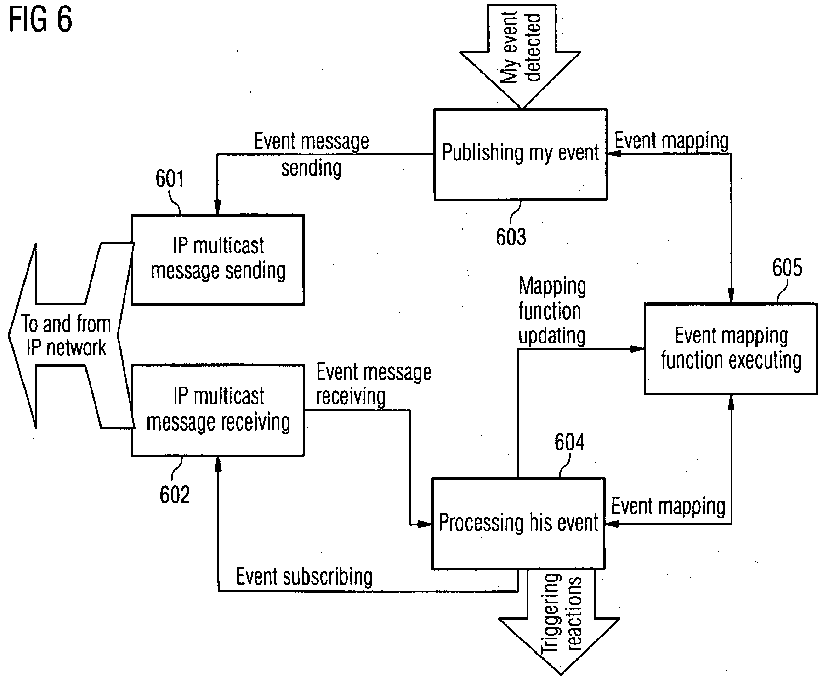

**Fig.6** shows the principles of the logical organization of the normal operations concerning event-signaling of each control function, after the bootstrapping phase, as both the publisher of the event instances it detects and a subscriber of events published by other control functions.

A basic functionality of each module can be described as follows:

### Module: IP Multicast message sending 601

This module 601 sends the multicast event-messages received from a module "Publishing my event" 603 over the underlying IP data transport network to all the correspondingly registered event-subscribers.

### Module: IP multicast message receiving 602

This module 602 comprises two tasks:
1. Triggered by a module "Processing his event" 604, module 602 registers as well as deregisters at the next router for receiving multicast event-messages on concerned events;
2. Module 602 receives multicast event-messages from the underlying IP data transport network on the concerned events it has registered for and forwards them to the module 604 for processing.

### Module: Publishing my event 603

By detecting an event-instance, module 603
1. accesses a module "Event mapping function execution" 605 for getting the corresponding IP-multicast address mapped from this event;
2. builds a multicast event-message on the detected event-instance with the IP-multicast address mentioned just before;
3. requests the module 601 to publish this multicast event-message.

### Module: Processing his event 604

This module 604 ensures that event-messages on the interested events (including "mapping function update") will be received and processed in time.
1. Module 604 accesses the module 605 for getting the corresponding IP-multicast addresses mapped from all the interested events and requests the module 602 to register to the corresponding IP-multicast groups.
2. Getting multicast event messages forwarded from the module 602, this module 604 analyzes the payload information on the event instances, filters out those which are currently not interested and triggers corresponding reactions to the interested ones.
3. By receiving "mapping function update", the module 604 requests the module 605 to update the mapping function.
4. Module 604 requests the module 602 to deregister from the event which are not of interest anymore.

### Module: Event mapping function execution 605

Tasks of this module comprise
1. executing the mapping function to map events to the corresponding IP multicast addresses;
2. being triggered by the module 604, to update (synchronize) the mapping function.

The approach of the flexible distributed event signaling presented herewith fits into the special needs of dynamic self-contained networks.

First, it meets the specific requirements of each individual network, e.g. different pre-defined IP address sets, different concerned event groups, different networking environments and different network organization. Second, it perfectly makes use of advantages provided by standard IP-multicast technology, e.g. widely compatibility, standard functionality of IP networks, efficient multicast message delivery, easy portability and simple implementation.

Further, this approach avoids unnecessary duplicated unicast-message transportation over the same paths and eliminates the requirements on centralized services. This makes it very attractive for dynamically changing networking environments like self-contained networks (Ambient Networks).

Another feature of this approach is its ability of self-adaptation to meet emerging requirements of changing networking environment without disturbing normal network operations, e.g. when some kernel functions are moved or replaced, when the set of the interested events is changed and when the pre-allocated IP-multicast addresses must be newly defined.

## Claims

1. A method for event signaling, wherein the event signaling is based on a multicast technology, the method comprising the steps of:
recognizing an event by a sender, wherein the sender is an event publisher;
mapping an event and/or an event identifier to a multicast address using a mapping function by the sender, the mapping function commonly shared with related potential event publishers;
initiating by the sender an action corresponding to the event via an IP multicast message;
putting the multicast message with the corresponding multicast address to an IP data transport network; and
sending the multicast message to all the message receivers of the same multicast group by the sender, wherein the message receivers are event-subscribers able to map an event and/or an event identifier to a multicast-address using the mapping function, and which are registered for the event with their respective adjacent router using the corresponding multicast address.

2. The method according to claim 1, wherein the sender is a producer that initiates the multicast message.

3. The method according to any of the previous claims, wherein the sender is a subscriber of the multicast group.

4. The method according to any of the previous claims, wherein the sender comprises a control function.

5. The method according to claim 4, wherein the control function comprises at least one of the following functionalities:
- selection of the mapping function;
- adjustment of related parameters;
- provision of a data packet.

6. The method according to any of the previous claims, wherein the mapping function is a Hash-function.

7. The method according to claim 5, wherein the mapping function is realized by a commonly-known Hash-function, wherein in case of an update of the mapping function, only related parameters for such a Hash-function are distributed among the subscribers of the multicast-address.

8. The method according to any of claims 6 to 8, wherein the method further comprises
distributing the mapping function and/or parameters of the mapping function via an URL accessible to a subscriber of the multicast group.

9. The method according to any of claims 6 to 9, wherein the method further comprises
synchronizing the mapping-function and/or parameters of the mapping function via an URL accessible to a subscriber of the multicast group.

10. The method according to any of the previous claims, wherein the subscriber deregisters itself at a next router.

11. The method according to any of the previous claims, wherein other subscribers of the multicast group are notified of an event by sending the multicast message.

12. The method according to any of the previous claims, wherein the multicast technology is IP-multicast and the multicast message is an IP-multicast message.

13. The method according to any of the previous claims, wherein the event comprises:
- an update of the mapping function;
- a registration of a subscriber;
- a deregistration of a subscriber.

14. A device for event signaling comprising a processor unit adapted to execute the method according of any of the preceding claims.

15. The device according to claim 14, wherein said device is a communication device, in particular a component of a network.

16. Communication system comprising the device according to any of claims 14 to 15.

## Patentansprüche

1. Verfahren zur Ereignissignalisierung, wobei die Ereignissignalisierung auf einer Multicast-Technologie basiert, wobei das Verfahren die folgenden Schritte aufweist:
Erkennen eines Ereignisses durch einen Sender, wobei der Sender ein Ereignisherausgeber ist;
Abbilden eines Ereignisses und/oder einer Ereigniskennung auf eine Multicast-Adresse unter Verwendung einer Abbildungsfunktion durch den Sender, wobei die Abbildungsfunktion mit den zugehörigen, potentiellen Ereignisherausgebern gemeinsam genutzt wird;
Einleiten einer Aktion, die dem Ereignis entspricht, durch den Sender über eine IP-Multicast-Nachricht;
Setzen der Multicast-Nachricht mit der entsprechenden Multicast-Adresse an ein IP-Datentransportnetz; und
Senden der Multicast-Nachricht an alle Nachrichtenempfänger der gleichen Multicast-Gruppe durch den Sender, wobei die Nachrichtenempfänger Ereignis-Teilnehmer sind, die fähig sind, ein Ereignis und/oder eine Ereigniskennung an eine Multicast-Adresse unter Verwendung der Abbildungsfunktion abzubilden, und die für das Ereignis mit ihrem jeweils benachbarten Router unter Verwendung der entsprechenden Multicast-Adresse registriert sind.

2. Verfahren nach Anspruch 1, wobei der Sender ein Erzeuger ist, der die Multicast-Nachricht initiiert.

3. Verfahren nach einem der vorhergehenden Ansprüche, wobei der Sender ein Teilnehmer der Multicast-Gruppe ist.

4. Verfahren nach einem der vorhergehenden Ansprüche, wobei der Sender eine Steuerfunktion aufweist.

5. Verfahren nach Anspruch 4, wobei die Steuerfunktion mindestens eine der folgenden Funktionalitäten aufweist:
- Auswahl der Abbildungsfunktion;
- Anpassung der zugehörigen Parameter;
- Bereitstellung eines Datenpakets.

6. Verfahren nach einem der vorhergehenden Ansprüche, wobei die Abbildungsfunktion eine Hashfunktion ist.

7. Verfahren nach Anspruch 5, wobei die Abbildungsfunktion durch eine allgemein bekannte Hashfunktion realisiert wird, wobei im Falle einer Aktualisierung der Abbildungsfunktion nur zugehörige Parameter für eine solche Hashfunktion unter den Teilnehmern der Multicast-Adresse verteilt werden.

8. Verfahren nach einem der Ansprüche 6 bis 8, wobei das Verfahren ferner ein Verteilen der Abbildungsfunktion und/oder von Parametern der Abbildungsfunktion über eine URL aufweist, die für einen Teilnehmer der Multicast-Gruppe zugänglich ist.

9. Verfahren nach einem der Ansprüche 6 bis 9, wobei das Verfahren ferner ein Synchronisieren der Abbildungsfunktion und/oder von Parametern der Abbildungsfunktion über eine URL aufweist, die für einen Teilnehmer der Multicast-Gruppe zugänglich ist.

10. Verfahren nach einem der vorhergehenden Ansprüche, wobei sich der Teilnehmer bei einem nächsten Router abmeldet.

11. Verfahren nach einem der vorhergehenden Ansprüche, wobei andere Teilnehmer der Multicast-Gruppe über ein Ereignis benachrichtigt werden, indem die Multicast-Nachricht gesendet wird.

12. Verfahren nach einem der vorhergehenden Ansprüche, wobei die Multicast-Technologie ein IP-Multicast ist und die Multicast-Nachricht eine IP-Multicast-Nachricht ist.

13. Verfahren nach einem der vorhergehenden Ansprüche, wobei das Ereignis aufweist:
- eine Aktualisierung der Abbildungsfunktion;
- eine Anmeldung eines Teilnehmers;
- eine Abmeldung eines Teilnehmers.

14. Vorrichtung zur Ereignissignalisierung, die eine Prozessoreinheit aufweist, die dazu ausgelegt ist, das Verfahren nach einem der vorhergehenden Ansprüche auszuführen.

15. Vorrichtung nach Anspruch 14, wobei die Vorrichtung eine Kommunikationsvorrichtung ist, insbesondere eine Komponente eines Netzes.

16. Kommunikationssystem, das die Vorrichtung nach einem der Ansprüche 14 bis 15 aufweist.

## Revendications

1. Un procédé de signalement d'événements, dans lequel le signalement d'événements est basé sur une technologie de multidiffusion, le procédé comprenant les étapes suivantes :
la prise en compte d'un événement par un expéditeur,
l'expéditeur étant un éditeur d'événements,
la mise en correspondance d'un événement et/ou d'un identifiant d'événement avec une adresse de multidiffusion au moyen d'une fonction de mise en correspondance par l'expéditeur, la fonction de mise en correspondance étant communément partagée avec des éditeurs d'événements potentiels reliés,
le lancement par l'expéditeur d'une action correspondant à l'événement par l'intermédiaire d'un message de multidiffusion IP,
le placement du message de multidiffusion avec l'adresse de multidiffusion correspondante sur un réseau de transport de données IP, et
l'envoi du message de multidiffusion à tous les récepteurs de messages du même groupe de multidiffusion par l'expéditeur, les récepteurs de messages étant des abonnés à des événements capables de mettre en correspondance un événement et/ou un identifiant d'événement avec une adresse de multidiffusion au moyen de la fonction de mise en correspondance et qui sont enregistrés pour l'événement avec leur routeur adjacent respectif au moyen de l'adresse de multidiffusion correspondante.

2. Le procédé selon la revendication 1, dans lequel l'expéditeur est un producteur qui lance le message de multidiffusion.

3. Le procédé selon l'une quelconque des revendications précédentes, dans lequel l'expéditeur est un abonné du groupe de multidiffusion.

4. Le procédé selon l'une quelconque des revendications précédentes, dans lequel l'expéditeur comprend une fonction de commande.

5. Le procédé selon la revendication 4, dans lequel la fonction de commande comprend au moins une des fonctionnalités suivantes :
- la sélection de la fonction de mise en correspondance,
- l'ajustement de paramètres reliés,
- la fourniture d'un paquet de données.

6. Le procédé selon l'une quelconque des revendications précédentes, dans lequel la fonction de mise en correspondance est une fonction de hachage.

7. Le procédé selon la revendication 5, dans lequel la fonction de mise en correspondance est mise en oeuvre par une fonction de hachage communément connue, dans lequel, dans le cas d'une actualisation de la fonction de mise en correspondance, uniquement des paramètres reliés pour ladite fonction de hachage sont distribués parmi les abonnés de l'adresse de multidiffusion.

8. Le procédé selon l'une quelconque des revendications 6 à 8, dans lequel le procédé comprend en outre la distribution de la fonction de mise en correspondance et/ou de paramètres de la fonction de mise en correspondance par l'intermédiaire d'une URL accessible à un abonné du groupe de multidiffusion.

9. Le procédé selon l'une quelconque des revendications 6 à 9, dans lequel le procédé comprend en outre la synchronisation de la fonction de mise en correspondance et/ou de paramètres de la fonction de mise en correspondance par l'intermédiaire d'une URL accessible à un abonné du groupe de multidiffusion.

10. Le procédé selon l'une quelconque des revendications précédentes, dans lequel l'abonné se désenregistre lui-même au niveau d'un routeur suivant.

11. Le procédé selon l'une quelconque des revendications précédentes, dans lequel d'autres abonnés du groupe de multidiffusion sont notifiés d'un événement par l'envoi du message de multidiffusion.

12. Le procédé selon l'une quelconque des revendications précédentes, dans lequel la technologie de multidiffusion est une multidiffusion IP et le message de multidiffusion est un message de multidiffusion IP.

13. Le procédé selon l'une quelconque des revendications précédentes, dans lequel l'événement comprend :
- une actualisation de la fonction de mise en correspondance,
- un enregistrement d'un abonné,
- un désenregistrement d'un abonné.

14. Un dispositif de signalement d'événements comprenant un unité processeur adaptée de façon à exécuter le procédé selon l'une quelconque des revendications précédentes.

15. Le dispositif selon la revendication 14, dans lequel ledit dispositif est un dispositif de communication, plus particulièrement un composant d'un réseau.

16. Un système de communication comprenant le dispositif selon l'une quelconque des revendications 14 à 15.
